# EUROPEAN PATENT APPLICATION

(11) **EP 4 068 830 A1**
(43) Date of publication of application: **05.10.2022**
(21) Application number: 19953888.5
(22) Date of filing: 26.11.2019
(51) Int. Cl.: H04W 16/28, H04W 72/04, H04B 7/06, H04B 7/08

(54) **TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/046252
(87) International publication number: WO 2021/106092

(57) **Abstract**

A terminal according to one aspect of the present disclosure includes: a receiving section that receives one Downlink Control Information (DCI) for scheduling two Physical Downlink Shared Channels (PDSCHs); and a control section that determines one or two Quasi Co-Locations (QCL) parameters for the two PDSCHs based on whether or not presence of a Transmission Configuration Indication (TCI) field is configured. According to one aspect of the present disclosure, it is possible to appropriately determine QCL parameters for multiple panels/TRPs.

## Description

### Technical Field

The present disclosure relates to a terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (Third Generation Partnership Project (3GPP) Releases (Rel.) 8 and 9), LTE-Advanced (3GPP Rel. 10 to 14) has been specified.

LTE successor systems (also referred to as, for example, the 5th generation mobile communication system (5G), 5G+ (plus), New Radio (NR) or 3GPP Rel. 15 or subsequent releases) are also studied.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (e.g., NR) that a user terminal (User Equipment (UE)) controls transmission/reception processing based on information related to Quasi-Co-Location (QCL).

Furthermore, it is studied for NR that one or a plurality of Transmission/Reception Points (TRPs) (multi TRPs) perform DL transmission (e.g., PDSCH transmission) for the UE by using one or a plurality of panels (multiple panels).

However, past NR specifications do not take multiple panels/TRPs into account, and therefore it is not possible to appropriately determine QCL parameters in a case where the multiple panels/TRPs are used. Unless the QCL parameters can be appropriately determined, there is a risk of degradation of system performance such as a decrease of a throughput.

It is therefore one of objects of the present disclosure to provide a terminal and a radio communication method that appropriately determine QCL parameters for multiple panels/TRPs.

### Solution to Problem

A terminal according to one aspect of the present disclosure includes: a receiving section that receives one Downlink Control Information (DCI) for scheduling two Physical Downlink Shared Channels (PDSCHs); and a control section that determines one or two Quasi Co-Locations (QCL) parameters for the two PDSCHs based on whether or not presence of a Transmission Configuration Indication (TCI) field is configured.

### Advantageous Effects of Invention

According to one aspect of the present disclosure, it is possible to appropriately determine QCL parameters for multiple panels/TRPs.

### Brief Description of Drawings

Fig. 1 is a diagram illustrating one example of a QCL assumption of a DMRS port of a PDSCH.
Figs. 2A to 2D are diagrams illustrating one example of a multi TRP scenario.
Figs. 3A and 3B are diagrams illustrating one example of default QCLs of multiple PDSCHs.
Fig. 4 is a diagram illustrating one example of a method for determining QCL parameters of multiple PDSCHs.
Fig. 5 is a diagram illustrating one example of multiple PDSCHs including different scheduling offsets.
Fig. 6 is a diagram illustrating one example of a schematic configuration of a radio communication system according to one embodiment.
Fig. 7 is a diagram illustrating one example of a configuration of a base station according to the one embodiment.
Fig. 8 is a diagram illustrating one example of a configuration of a user terminal according to the one embodiment.
Fig. 9 is a diagram illustrating one example of hardware configurations of the base station and the user terminal according to the one embodiment.

### Description of Embodiments

### (TCI and QCL)

It is studied for NR to control UE's reception processing (e.g., at least one of reception, demapping, demodulation and decoding) and transmission processing (e.g., at least one of transmission, mapping, precoding, modulation and encoding) of at least one of a signal and a channel (that are expressed as a signal/channel) based on a Transmission Configuration Indication state (TCI state).

The TCI state may indicate an element that is applied to a downlink signal/channel. An element corresponding to a TCI state applied to an uplink signal/channel may be expressed as a spatial relation.

The TCI state is information related to Quasi-Co-Location (QCL) of a signal/channel, and may be referred to as, for example, a spatial reception parameter or spatial relation information. The TCI state may be configured to the UE per channel or per signal.

QCL is an index that indicates a statistical property of a signal/channel. In a case where, for example, a certain signal/channel and another signal/channel have a QCL relation, the QCL relation may mean that it is possible to assume that at least one of a Doppler shift, a Doppler spread, an average delay, a delay spread and a spatial parameter (e.g., spatial reception parameter (spatial Rx parameter)) is identical (at least one of these parameters is quasi-co-located) between a plurality of these different signals/channels.

In addition, the spatial reception parameter may be associated with a UE reception beam (e.g., reception analog beam), and the beam may be specified based on spatial QCL. The QCL (or at least one element of the QCL) in the present disclosure may be read as spatial QCL (sQCL).

A plurality of types of QCL (QCL types) may be specified. For example, four QCL types A to D whose parameters (or parameter sets) that can be assumed as identical are different may be provided, and the parameters (that may be referred to as QCL parameters) are as follows:
- QCL type A (QCL-A): Doppler shift, Doppler spread, average delay and delay spread,
- QCL type B (QCL-B): Doppler shift and Doppler spread,
- QCL type C (QCL-C): Doppler shift and average delay, and
- QCL type D (QCL-D): spatial reception parameter.

A UE's assumption that a certain Control Resource Set (CORESET), channel or reference signal has a certain QCL (e.g., QCL type D) relation with another CORESET, channel or reference signal may be referred to as a QCL assumption.

The UE may determine at least one of a transmission beam (Tx beam) and a reception beam (Rx beam) of the signal/channel based on a TCI state or the QCL assumption of the signal/channel.

The TCI state may be, for example, information related to QCL of a target channel (in other words, a Reference Signal (RS) for the target channel) and another signal (e.g., another RS). The TCI state may be configured (instructed) by a higher layer signaling, a physical layer signaling or a combination of these signalings.

In the present disclosure, the higher layer signaling may be one or a combination of, for example, a Radio Resource Control (RRC) signaling, a Medium Access Control (MAC) signaling and broadcast information.

For example, an MAC Control Element (MAC CE) or an MAC Protocol Data Unit (PDU) may be used for the MAC signaling. The broadcast information may be, for example, a Master Information Block (MIB), a System Information Block (SIB), Remaining Minimum System Information (RMSI) or Other System Information (OSI).

The physical layer signaling may be, for example, Downlink Control Information (DCI).

A channel to which the TCI state or the spatial relation is configured (indicated) may be at least one of, for example, a Physical Downlink Shared Channel (PDSCH), a Physical Downlink Control Channel (PDCCH), a Physical Uplink Shared Channel (PUSCH) and a Physical Uplink Control Channel (PUCCH).

Furthermore, an RS that has the QCL relation with the channel may be at least one of, for example, a Synchronization Signal Block (SSB), a Channel State Information Reference Signal (CSI-RS), a Sounding Reference Signal (SRS), a tracking CSI-RS (also referred to as a Tracking Reference Signal (TRS)), and a QCL detection reference signal (also referred to as a QRS).

The SSB is a signal block including at least one of a Primary Synchronization Signal (PSS), a Secondary Synchronization Signal (SSS) and a Physical Broadcast Channel (PBCH). The SSB may be referred to as an SS/PBCH block.

The UE may receive configuration information (e.g., PDSCH-Config or tci-StatesToAddModList) including a list of information elements of TCI states by a higher layer signaling.

An information element of a TCI state ("TCI-state IE" of RRC) configured by the higher layer signaling may include a TCI state ID and one or a plurality of pieces of QCL information ("QCL-Info"). The QCL information may include at least one of information (RS related information) that relates to an RS that is in a QCL relation, and information (QCL type information) that indicates a QCL type. The RS related information may include information such as an RS index (e.g., an SSB index or a Non-Zero-Power CSI-RS (NZP CSI-RS) resource Identifier (ID)), an index of a cell in which the RS is arranged, and an index of a Bandwidth Part (BWP) in which the RS is arranged.

According to Rel. 15 NR, both of an RS of the QCL type A and an RS of the QCL type D or only the RS of the QCL type A may be configured as a TCI state of at least one of a PDCCH and a PDSCH to the UE.

In a case where a TRS is configured as the RS of the QCL type A, the TRS is unlike a DeModulation Reference Signal (DMRS) of the PDCCH or the PDSCH, and the same TRS is periodically transmitted over a long period of time. The UE can measure the TRS, and calculate, for example, an average delay and a delay spread.

The UE with the TRS configured as the RS of the QCL type A to the TCI state of the DMRS of the PDCCH or the PDSCH can assume that the DMRS of the PDCCH or the PDSCH and a parameter (such as the average delay or the delay spread) of the QCL type A of the TRS are the same, so that it is possible to obtain the parameter (such as the average delay or the delay spread) of the QCL type A of the DMRS of the PDCCH or the PDSCH from a measurement result of the TRS. When performing channel estimation on at least one of the PDCCH and the PDSCH, the UE can perform more accurate channel estimation by using the measurement result of the TRS.

The UE configured with the RS of the QCL type D can determine a UE reception beam (a spatial domain reception filter or a UE spatial domain reception filter) by using the RS of the QCL type D.

An RS of a QCL type X of a TCI state may mean an RS that has a relation of the QCL type X with (a DMRS of) a certain channel/signal, and this RS may be referred to as a QCL source of the QCL type X of the TCI state.

### <TCI State for PDCCH>

Information related to QCL of a PDCCH (or a DMRS antenna port associated with the PDCCH) and a certain RS may be referred to as, for example, a TCI state for the PDCCH.

The UE may decide the TCI state for a UE-specific PDCCH (CORESET) based on a higher layer signaling. For example, one or a plurality of (K) TCI states may be configured to the UE per CORESET by an RRC signaling.

The UE may activate one of a plurality of TCI states configured by the RRC signaling for each CORESET by using an MAC CE. The MAC CE may be referred to as a TCI State Indication for a UE-specific PDCCH MAC CE. The UE may monitor the CORESET based on an active TCI state associated with the CORESET.

### <TCI State for PDSCH>

Information related to QCL of a PDSCH (or a DMRS antenna port associated with the PDSCH) and a certain DL-RS may be referred to as, for example, a TCI for the PDSCH.

M (M ≥ 1) TCI states for PDSCHs (QCL information for the M PDSCHs) may be notified (configured) to the UE by a higher layer signaling. In addition, the number M of TCI states configured to the UE may be limited according to at least one of UE capability and a QCL type.

DCI used to schedule a PDSCH may include a field (that may be referred to as, for example, a TCI field or a TCI state field) that indicates a TCI state for the PDSCH. The DCI may be used to schedule a PDSCH of one cell, and may be referred to as, for example, DL DCI, a DL assignment, a DCI format 1_0 and a DCI format 1_1.

Whether or not the TCI field is included in the DCI may be controlled based on information notified from a base station to the UE. The information may be information (e.g., TCI field presence information, intra-DCI presence information or a higher layer parameter TCI-PresentInDCI) that indicates whether the TCI field is present or absent in the DCI. The information may be configured to the UE by, for example, the higher layer signaling.

In a case where TCI states of more than 8 types are configured to the UE, the TCI states of 8 types or less may be activated (or indicated) by using an MAC CE. The MAC CE may be referred to as a TCI States Activation/Deactivation for a UE-specific PDSCH MAC CE. The value of the TCI field in the DCI may indicate one of the TCI states activated by the MAC CE.

In a case where the TCI field presence information that is set as "enabled" is configured to a CORESET for scheduling a PDSCH (a CORESET used to transmit a PDCCH for scheduling a PDSCH) for the UE, the UE may assume that a TCI field is present in the DCI format 1_1 of the PDCCH transmitted on the CORESET.

In a case where the TCI field presence information is not configured to the CORESET for scheduling the PDSCH, or the PDSCH is scheduled by the DCI format 1_0, and in a case where a time offset between reception of DL DCI (DCI for scheduling the PDSCH) and reception of a PDSCH associated with the DCI is a threshold or more, the UE may assume that a TCI state or a QCL assumption for the PDSCH is identical to a TCI state or a QCL assumption applied to the CORESET used to transmit a PDCCH for scheduling the PDSCH to determine QCL of a PDSCH antenna port.

In a case where the TCI field presence information is set as "enabled", and in a case where a TCI field in DCI in a Component Carrier (CC) for scheduling (PDSCH) indicates an activated TCI state in the CC to be scheduled or a DL BWP, and the PDSCH is scheduled by the DCI format 1_1, the UE may use a TCI that conforms to a value of a TCI field in a detected PDCCH including DCI to determine QCL of the PDSCH antenna port. In a case where a time offset between reception of DL DCI (for scheduling the PDSCH) and reception of a PDSCH associated with the DCI (the PDSCH scheduled by the DCI) is a threshold or more, the UE may assume that a DM-RS port of a PDSCH of a serving cell is quasi-co-located with an RS in a TCI state related to a QCL type parameter given by an indicated TCI state.

In a case where a single slot PDSCH is configured to the UE, the indicated TCI state may be based on an activated TCI state in a slot including a scheduled PDSCH. In a case where a multiple slot PDSCH is configured to the UE, the indicated TCI state may be based on an activated TCI state in a first slot including a scheduled PDSCH, or the UE may expect that the indicated TCI state is identical over slots including the scheduled PDSCH. In a case where the UE is configured with a CORESET associated with a search space set for cross-carrier scheduling, and in a case where the TCI field presence information is set as "enabled" to the CORESET for the UE, and at least one of TCI states configured to a serving cell scheduled by a search space set includes the QCL type D, the UE may assume that a time offset between a detected PDCCH and a PDSCH associated with the PDSCH is a threshold or more.

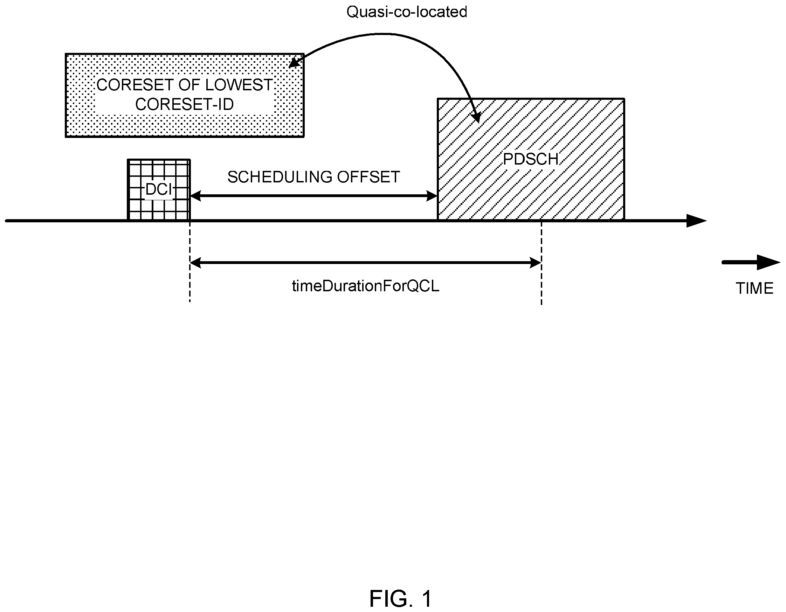

In both of a case where the intra-DCI TCI information (higher layer parameter TCI-PresentInDCI) is set as "enabled" in an RRC connected mode, and a case where the intra-DCI TCI information is not configured, and in a case where a time offset between reception of DL DCI (DCI for scheduling a PDSCH) and reception of a corresponding PDSCH (the PDSCH scheduled by the DCI) is less than a threshold, the UE may assume that a DM-RS port of a PDSCH of a serving cell is quasi-co-located with an RS related to a QCL parameter used to indicate QCL of a PDCCH in a CORESET that has a lowest CORESET-ID in a latest slot in which one or more CORESETs in an active BWP of the serving cell are monitored by the UE, and that is associated with a monitored search space (Fig. 1). This RS may be referred to as a default TCI state of a PDSCH or a default QCL assumption of the PDSCH.

The time offset between reception of the DL DCI and reception of the PDSCH associated with the DCI may be referred to as a scheduling offset.

Furthermore, the above threshold may be referred to as, for example, a QCL time duration, "timeDurationForQCL", "Threshold", "Threshold for offset between a DCI indicating a TCI state and a PDSCH scheduled by the DCI", "Threshold-Sched-Offset", a scheduling offset threshold or a scheduling offset threshold.

The QCL time duration may be based on UE capability, or may be based on delay related to, for example, decoding of a PDCCH and beam switching. The QCL time duration may be a minimum time that is necessary for the UE to receive a PDCCH and apply spatial QCL information received in DCI for PDSCH processing. The QCL time duration may be expressed as the number of symbols per subcarrier spacing, or may be expressed as a time (e.g., µs). Information of the QCL time duration may be reported as UE capability information from the UE to the base station, or may be configured from the base station to the UE by using a higher layer signaling.

For example, the UE may assume that the DMRS port of the above PDSCH is quasi-co-located with a DL-RS that is based on the TCI state activated for the CORESET associated with the above lowest CORESET-ID. The latest slot may be, for example, a slot for receiving DCI for scheduling the above PDSCH.

In addition, the CORESET-ID may be an ID (an ID for identifying a CORESET or controlResourceSetId) configured by an RRC information element "ControlResourceSet".

In a case where a CORESET is not configured to a CC, the default TCI state may be an activated TCI state that is applicable to a PDSCH in an active DL BWP of the CC, and has a lowest ID.

In a case where a PDSCH and a PDCCH for scheduling the PDSCH are in different Component Carriers (CCs) (cross-carrier scheduling) in Rel. 16 and subsequent releases, and in a case where PDCCH-to-PDSCH delay is less than a QCL time duration or in a case where a TCI state is absent in DCI for scheduling, the UE may obtain a QCL assumption for the scheduled PDSCH from an active TCI state that is applicable to a PDSCH in an active BWP of the scheduled cell and has a lowest ID.

### (Service (Traffic Type))

Future radio communication systems (e.g., NR) assume traffic types (also referred to as, for example, types, services, service types, communication types and use cases) such as higher sophistication of a mobile broadband (e.g., enhanced Mobile Broadband (eMBB)), machine type communications (e.g., massive Machine Type Communications (mMTC)) that realize multiple simultaneous connection, Internet of Things (IoT)), and highly reliable and low latency communications (e.g., Ultra-Reliable and Low-Latency Communications (URLLC)). For example, URLLC is requested to realize less delay and more ultra reliability than those of eMBB.

The traffic type may be identified in a physical layer based on at least one of followings.
- A logical channel that has a different priority
- A Modulation and Coding Scheme (MCS) table (MCS index table)
- A Channel Quality Indication (CQI) table
- A DCI format
- A Radio Network Temporary Identifier (an RNTI such as a System Information (SI)-RNTI) used to scramble (mask) a Cyclic Redundancy Check (CRC) bit included in (added to) the DCI (DCI format)
- A Radio Resource Control (RRC) parameter
- A certain RNTI (e.g., an RNTI for URLLC or an MCS-C-RNTI)
- A search space
- A field (e.g., reuse of a newly added field or a legacy field) in the DCI

The traffic type may be associated with, for example, communication requirements (requirements or requirement conditions such as delay and an error rate) and a data type (such as a sound and data).

A difference between URLLC requirements and eMBB requirements may be that latency of URLLC is less than latency of eMBB, or may be that the URLLC requirements include a requirement of reliability.

### (Multi TRPs)

It is studied for NR that one or a plurality of Transmission/Reception Points (TRPs) (multi TRPs) perform DL transmission for the UE by using one or a plurality of panels (multiple panels). Furthermore, it is studied that the UE performs UL transmission for one or a plurality of TRPs.

In addition, a plurality of TRPs may be associated with the same cell Identifier (ID), or may be associated with different cell IDs. The cell ID may be a physical cell ID or may be a virtual cell ID.

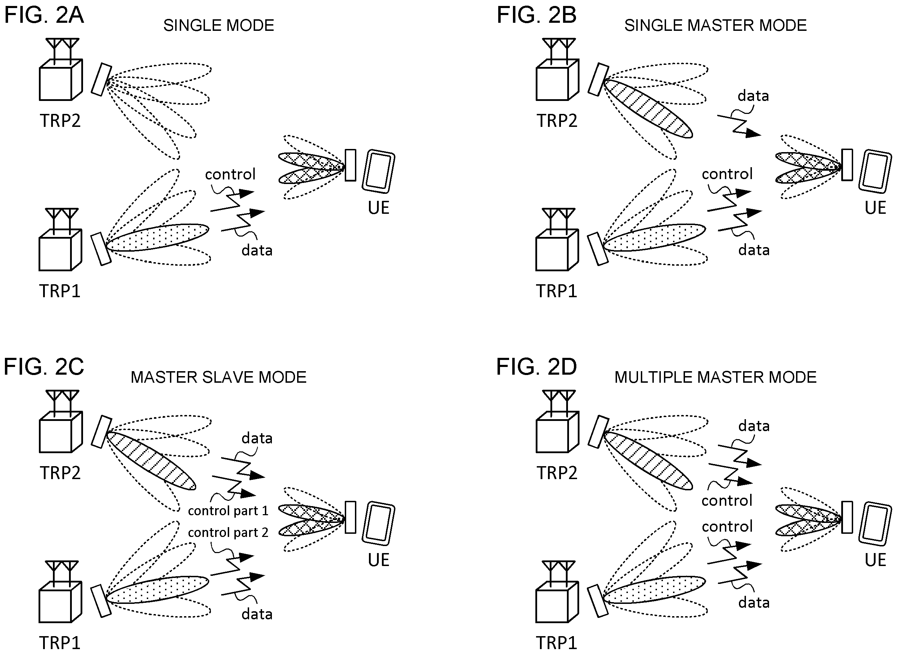

Figs. 2A to 2D are diagrams illustrating one example of a multi TRP scenario. These examples assume that each TRP can transmit four different beams. However, the present disclosure is not limited to these examples.

Fig. 2A illustrates one example of a case (that may be referred to as, for example, a single mode or a single TRP) where only one TRP (a TRP 1 in this example) of the multi TRPs performs transmission for the UE. In this case, the TRP 1 transmits both of a control signal (PDCCH) and a data signal (PDSCH) to the UE.

Fig. 2B illustrates one example of a case (that may be referred to as a single master mode) where only one TRP (the TRP 1 in this example) of the multi TRPs transmits a control signal to the UE, and the multi TRPs transmit data signals. The UE receives each PDSCH transmitted from the multi TRPs based on one Downlink Control Information (DCI).

Fig. 2C illustrates one example of a case (that may be referred to as a master slave mode) where each of the multi TRPs transmits part of a control signal to the UE, and the multi TRPs transmit data signals. The TRP 1 may transmit a part 1 of the control signal (DCI), and a TRP 2 may transmit a part 2 of the control signal (DCI). The part 2 of the control signal may depend on the part 1. The UE receives each PDSCH transmitted from the multi TRPs based on parts of these pieces of DCI.

Fig. 2D illustrates one example of a case (that may be referred to as a multiple master mode) where each of the multi TRPs transmits different control signals to the UE, and the multi TRPs transmit data signals. The TRP 1 may transmit the first control signal (DCI), and the TRP 2 may transmit the second control signal (DCI). The UE receives each PDSCH transmitted from the multi TRPs based on these pieces of DCI.

When a plurality of PDSCHs (that may be referred to as multiple PDSCHs) from the multi TRPs illustrated in Fig. 2B are scheduled by using one DCI, the DCI may be referred to as single DCI (S-DCI or a single PDCCH). Furthermore, when a plurality of PDSCHs from the multi TRPs illustrated in Fig. 2D are respectively scheduled by using a plurality of pieces of DCI, a plurality of these pieces of DCI may be referred to as multiple pieces of DCI (M-DCI or multiple PDCCHs).

Each TRP of the multi TRPs may transmit a respectively different Code Word (CW) and different layer. Non-Coherent Joint Transmission (NCJT) is studied as one mode of multi TRP transmission.

According to NCJT, for example, the TRP 1 modulates, maps and performs layer mapping on a first code word, uses first precoding for a first number of layers (e.g., 2 layers), and thereby transmits a first PDSCH. Furthermore, the TRP 2 modulates, maps and performs layer mapping on a second code word, uses second precoding for a second number of layers (e.g., 2 layers), and thereby transmits a second PDSCH.

In addition, it may be defined that a plurality of PDSCHs (multiple PDSCHs) to be subjected to NCJT partially or fully overlap in at least one of time and frequency domains. That is, at least one of the time and frequency resources of the first PDSCH from the first TRP and the second PDSCH from the second TRP may overlap.

It may be assumed that these first PDSCH and second PDSCH do not have a Quasi-Co-Location (QCL) relation (are not quasi-co-located). Reception of the multiple PDSCHs may be read as simultaneous reception of PDSCHs that are not a certain QCL type (e.g., QCL type D).

It is studied for URLCC for multi TRPs to support repetition of PDSCHs (Transport Blocks (TBs) or Code Words (CWs)) over the multi TRPs. It is studied to support repetition schemes (URLLC schemes such as schemes 1, 2a, 2b, 3 and 4) over the multi TRPs in the frequency domain, a layer (spatial) domain or the time domain. According to the scheme 1, multiple PDSCHs from multi TRPs are subjected to Space Division Multiplexing (SDM). According to the schemes 2a and 2b, PDSCHs from multi TRPs are subjected to Frequency Division Multiplexing (FDM). According to the scheme 2a, Redundancy Versions (RVs) of the multi TRPs are the same. According to the scheme 2b, RVs of the multi TRPs may be the same or may be different. According to the schemes 3 and 4, multiple PDSCHs from multi TRPs are subjected to Time Division Multiplexing (TDM). According to the scheme 3, the multiple PDSCHs from the multi TRPs are transmitted in one slot. According to the scheme 4, the multiple PDSCHs from the multi TRPs are transmitted in different slots.

According to this multi TRP scenario, it is possible to perform more flexible transmission control that uses channels of good quality.

NCJT that uses the multi TRPs/panels is likely to use a high rank. Both of single DCI (a single PDCCH in, for example, Fig. 2B) and multiple pieces of DCI (a single PDCCH in, for example, Fig. 2D) may be supported to support ideal and non-ideal backhauls between a plurality of TRPs. A maximum number of TRPs may be 2 for both of the single DCI and the multiple pieces of DCI.

Enhancement of a TCI is studied for a single PDCCH design (mainly for the ideal backhaul). Each TCI code point in DCI may be associated with 1 or 2 TCI states. A TCI field size may be the same as that of Rel. 15.

Enhancement of a DMRS is studied for the single PDCCH design (mainly for the ideal backhaul). The UE may support a following combination of layers from two TRPs instructed by an antenna port field. The combination of the numbers of layers of the TRP 1 and the TRP 2 for a single Code Word (CW) and a Single User (SU) may be one of 1+1, 1+2, 2+1 and 2+2 in a form of "the number of layers of the TRP 1 + the number of layers of the TRP 2". Support of a combination of at least one layer of 1+3 and 3+1 from the two TRPs instructed by the antenna port field, support of a Multiple User (MU) case, and support of two CWs have not been agreed. An antenna port field size may be the same as that of Rel. 15.

A maximum number of CORESETs per PDCCH configuration information (PDCCH-Config) may be increased to 5 for a multiple PDCCH design (for both of the ideal backhaul and the non-ideal backhaul) according to UE capability. The maximum number of CORESETs to which the same TRP may be configured may be up to a number reported by the UE capability. The same TRP may be the same higher layer index (e.g., CORESET pool index) that is configured per PDCCH configuration information or per CORESET if configured. The UE capability may include at least a candidate value of 3.

A maximum number of resources of at least one of BD and a CCE per serving cell or per slot may be increased depending on the UE capability for the multiple PDCCH design (for both of the ideal backhaul and the non-ideal backhaul).

Enhancement of a PDSCH is studied only for the multiple PDCCH-based design.

A total number of CWs in a plurality of scheduled PDSCHs may be up to 2. Each PDSCH is scheduled by one PDCCH. A total number of Multi-Input Multi-Output (MIMO) layers of a PDSCH to be scheduled may be up to a number reported by MIMO capability of the UE. It has not been agreed to increase a maximum number of HARQ processes in Rel. 16.

The UE may support different PDSCH scrambling sequences for a plurality of PDSCHs. The UE may support enhancement of an RRC configuration for configuring a plurality of dataScramblingIdentityPDSCH. Each dataScramblingIdentityPDSCH may be associated with a higher layer index per CORESET, and applied to a PDSCH scheduled by using DCI detected in a CORESET having the same higher layer index.

The UE may support at least ones of pluralities of fully overlapped PDSCHs, partially overlapped PDSCHs and non-overlapped PDSCHs in the time and frequency domains for PDSCH resource allocation.

Regarding rate matching, CRS pattern information (lte-CRS-ToMatchAround) for configuring a plurality of CRS patterns in a serving cell may be enhanced for an LTE Cell-specific Reference Signal (CRS). The CRS pattern information is a parameter for determining a CRS pattern, and the UE may perform rate matching around the CRS pattern.

Enhancement of a PUCCH is studied only for the multiple PDCCH-based design.

Both of joint ACK/NACK (HARQ-ACK) feedback and separate ACK/NACK feedback may be supported. An RRC signaling may be used to switch between joint feedback and separate feedback. Both of a semi-static HARQ-ACK codebook and a dynamic HARQ-ACK codebook may be supported for the joint ACK/NACK feedback. For the separate ACK/NACK feedback, a higher layer index per CORESET that is used to generate separated HARQ-ACK codebooks may be configured, both of the semi-static HARQ-ACK codebook and the dynamic HARQ-ACK codebook may be supported, two long PUCCHs subjected to TDM in 1 slot may be supported, a short PUCCH and a long PUCCH subjected to TDM in 1 slot may be supported, or two short PUCCHs subjected to TDM in 1 slot may be supported.

### (Default QCL for Multi TRPs)

The UE may assume for single DCI-based multi TRP/panel transmission that uses at least one TCI state that is configured to a serving cell of a PDSCH to be scheduled and includes the QCL type D that, in a case where a time offset between reception of a PDCCH and reception of a corresponding PDSCH is less than a threshold (timeDurationForQCL) after reception of a TCI state activation command for a UE-specific PDSCH, a DMRS port of the PDSCH conforms to a QCL parameter instructed by a next default TCI state. The UE may use as the default TCI state a TCI state associated with a lowest code point among TCI code points including two different TCI states to be activated for the PDSCH. In a case where all TCI code points are mapped in a single TCI state, the default TCI state may conform to an operation of Rel. 15. Using the default TCI state for a plurality of PDSCHs based on the single DCI may be part of UE capability.

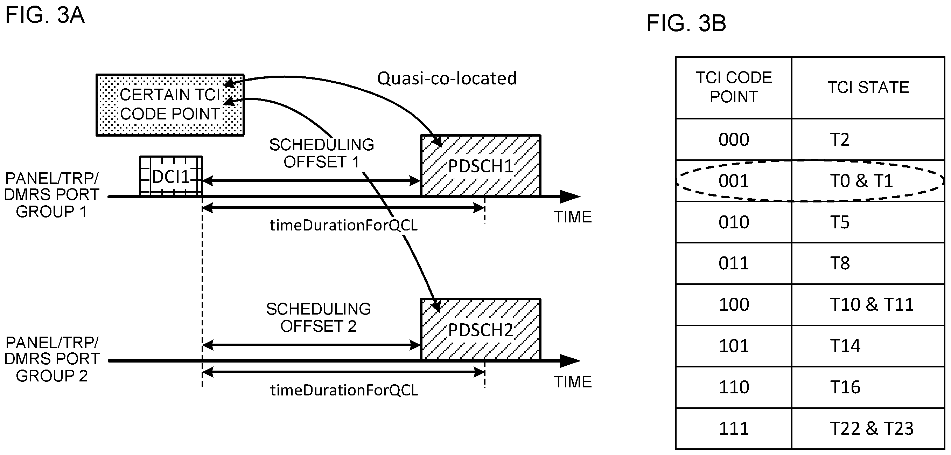

Figs. 3A and 3B are diagrams illustrating one example of default QCL of multiple PDSCHs based on single DCI. This example corresponds to the example of the single PDCCH illustrated in Fig. 2B.

The UE receives DCI 1 and a PDSCH 1 transmitted from a panel 1 (or a TRP 1 or a CORESET pool 1). Furthermore, the UE receives a PDSCH 2 transmitted from a panel 2 (or a TRP 2 or a CORESET pool 2).

The DCI 1 schedules reception of the PDSCH 1 and the PDSCH 2. A scheduling offset 1 from reception of the DCI 1 to reception of the PDSCH 1 is less than a scheduling offset threshold. Furthermore, a scheduling offset 2 from reception of the DCI 1 to reception of the PDSCH 2 is less than the scheduling offset threshold.

Fig. 3B illustrates one example of a correspondence between TCI code points and TCI states in a TCI field of the DCI 1 assumed in the example in Fig. 3A. A lowest code point among TCI code points including two different TCI states to be activated for a PDSCH is "001". The UE uses a TCI state (TCI state ID) of T0 and T1 associated with this TCI code point "001" as default QCL of the PDSCH 1 and the PDSCH 2.

In a case where a CORESET pool index (CORESETPoolIndex) is configured to multiple DCI-based multi TRP/panel transmission, and in a case where a time offset between reception of a PDCCH and reception of a corresponding PDSCH is less than a threshold, the UE may assume that a DM-RS port of the PDSCH is quasi-co-located with an RS related to a QCL parameter used for the PDCCH of a lowest CORESET index among CORESETs to which a same value of a CORESET pool index is configured in each latest slot in which 1 or more CORESETs associated with respective CORESET pool indices in an active BWP of a serving cell are monitored by the UE. Support of this function is displayed (reported) by UE capability. In a case where the UE does not support the above feature, the operation of Rel. 15 may be reused irrespectively of the CORESET pool index.

However, regarding default QCL of a plurality of PDSCHs scheduled by single DCI, in a case where TCI field presence information (tci-PresectInDCI) is not configured, the single DCI does not include a TCI field, and therefore the default QCL is not clear. Unless a QCL parameter of a PDSCH is appropriately determined, it is not possible to suitably realize a spatial diversity gain and high rank transmission in a case where multiple panels/TRPs are used, and there is a risk that an increase of a communication throughput is suppressed.

Hence, the inventors of the present invention have conceived a method for determining a QCL parameter based on whether or not TCI field presence information is configured to a plurality of PDSCHs that are based on single DCI.

An embodiment according to the present disclosure will be descried in detail below with reference to the drawings. A radio communication method according to each embodiment may be each applied alone or may be applied in combination.

In the present disclosure, a panel, an Uplink (UL) transmission entity, a TRP, a spatial relation, a COntrol REsource SET (CORESET), a PDSCH, a code word, a base station, a certain signal antenna port (e.g., DeModulation Reference Signal (DMRS) port), a certain signal antenna port group (e.g., DMRS port group), groups (e.g., a Code Division Multiplexing (CDM) group, a reference signal group and a CORESET group) for multiplexing, a CORESET pool, a CW, a Redundancy Version (RV), and layers (an MIMO layer, a transmission layer and a spatial layer) may be interchangeably read. Furthermore, a panel Identifier (ID) and a panel may be interchangeably read. In the present disclosure, a TRP ID and a TRP may be interchangeably read.

In the present disclosure, NCJT, NCJT that uses multi TRPs, multiple PDSCHs that use NCJT, multiple PDSCHs and a plurality of PDSCHs from the multi TRPs may be interchangeably read. In this regard, the multiple PDSCHs may mean a plurality of PDSCHs that at least part (e.g., 1 symbol) of time resources overlap, may mean a plurality of PDSCHs that all (e.g., all symbols) of time resources overlap, may mean a plurality of PDSCHs that all of time resources do not overlap, may mean a plurality of PDSCHs that carry the same TB or the same CW, or may mean a plurality of PDSCHs to which different UE beams (spatial domain reception filters or QCL parameters) are applied.

In the present disclosure, the default TCI state may be interchangeably read as default QCL or a default QCL assumption. Although this TCI state or QCL (QCL assumption) will be described as the default TCI state below, how this TCI state or QCL is described is not limited to this.

In addition, a definition of the default TCI state is not limited to this. The default TCI state may be, for example, a TCI state that is assumed in a case where a TCI state/QCL indicated by DCI cannot be used for a certain channel/signal (e.g., PDSCH), or may be a TCI state that is assumed in a case where a TCI state/QCL is not indicated (or configured).

In the present disclosure, a cell, a CC, a carrier, a BWP and a band may be interchangeably read.

In the present disclosure, an index, an ID, an indicator and a resource ID may be interchangeably read.

A TCI state, a TCI state or a QCL assumption, a QCL assumption, a QCL parameter, a spatial domain reception filter, a UE spatial domain reception filter, a spatial domain filter, a UE reception beam, a DL reception beam, DL precoding, a DL precoder, a DL-RS, a QCL parameter that a DMRS port conforms to, an RS of the QCL type D of a TCI state or a QCL assumption, an RS of the QCL type A of a TCI state or a QCL assumption may be interchangeably read. An RS of the QCL type D, a DL-RS associated with the QCL type D, a DL-RS having the QCL type D, a DL-RS source, an SSB and a CSI-RS may be interchangeably read.

In the present disclosure, the TCI state may be information (e.g., a DL-RS, a QCL type or a cell to which a DL-RS is transmitted) related to a reception beam (spatial domain reception filter) indicated (configured) to the UE. The QCL assumption may be information (e.g., a DL-RS, a QCL type or a cell to which a DL-RS is transmitted) related to a reception beam (spatial domain reception filter) assumed by the UE based on transmission or reception of an associated signal (e.g.,

### PRACH).

In the present disclosure, the latest slot, the most recent slot, the latest search space and the most recent search space may be interchangeably read.

In the present disclosure, a DCI format 0_0, DCI that does not include an SRI, DCI that does not include an instruction of a spatial relation and DCI that does not include a CIF may be interchangeably read. In the present disclosure, a DCI format 0_1, DCI that includes an SRI, DCI that includes an instruction of a spatial relation and DCI that includes a CIF may be interchangeably read.

### (Radio Communication System)

Based on whether or not TCI field presence information (tci-PresentInDCI or presence of a TCI field) is configured, the UE may determine one or two QCL parameters for multiple PDSCHs that are based on single DCI. The QCL parameter may be a QCL parameter (an RS of the QCL type D) that conforms to a DMRS port of a PDSCH.

In a case where a default QCL application condition is satisfied, the UE may use one or two default QCLs for two PDSCHs. Two PDSCHs, two CWs, two RVs, two MIMO layers, two TRPs and two panels may be interchangeably read. The default QCL application condition may be that the TCI field presence information is not configured, or may be that the TCI field presence information is configured, and a scheduling offset (time offset) between reception of a PDCCH and reception of a corresponding PDSCH is less than a scheduling offset threshold (a threshold or timeDurationForQCL).

Certain QCL may be default QCL of one PDSCH, may be default QCL of a PDSCH according to Rel. 15, may be an RS related to a QCL parameter used to instruct QCL of a PDCCH in a CORESET that has a lowest CORESET-ID and is associated with a search space to be monitored in a latest slot in which one or more CORESETs in an active BWP of a serving cell are monitored by the UE, or may be an RS related to a QCL parameter used to instruct QCL of a PDCCH in a CORESET that has a lowest CORESET-ID in an active BWP of a serving cell.

When the UE determines two default QCLs (two TCI states) for two PDSCHs, the UE may use the first default QCL for the first PDSCH, and use the second default QCL for the second PDSCH.

### <Operation In Case Where TCI Field Presence Information Is Configured>

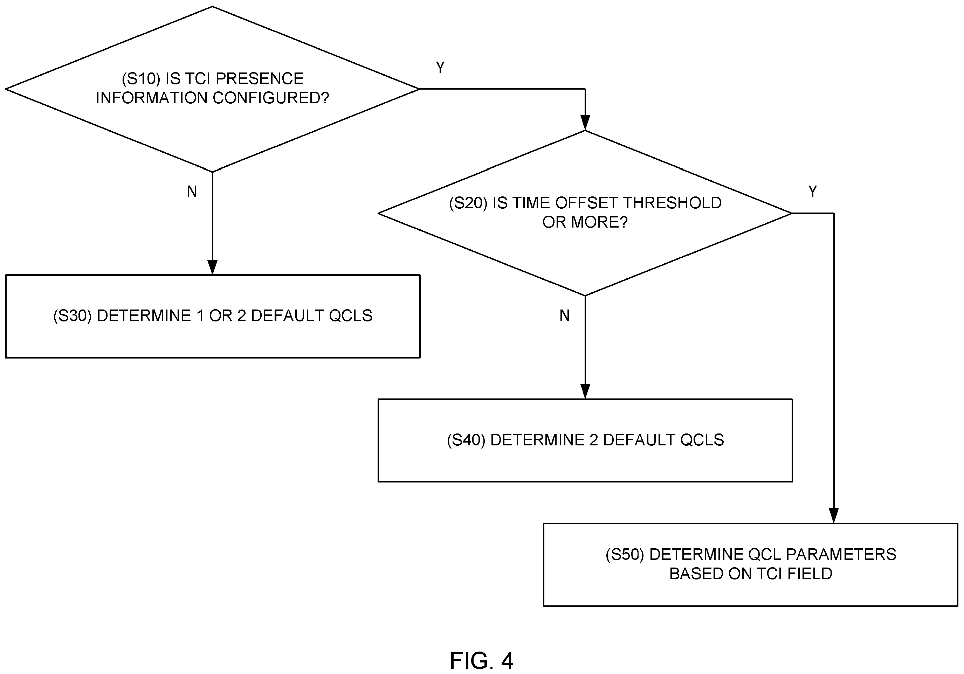

In a case where, for example, TCI field presence information is configured (S10: Y), and a time offset between reception of a PDCCH and reception of a corresponding PDSCH is less than a threshold (S20: N) as illustrated in Fig. 4, the UE may assume (use or determine) two default QCLs (QCL parameters) respectively for two PDSCHs (S40). In a case where the TCI field presence information is configured, and the time offset between reception of the PDCCH and reception of the corresponding PDSCH is less than the threshold, the UE may determine the two default QCLs respectively for the two PDSCHs based on a higher layer parameter. The higher layer parameter may be a TCI state, or may be information that indicates default QCL.

The two default QCLs may be one of following default QCLs 1 to 4.

### [Default QCL 1]

Default QCL for the above-described single DCI.

When there is a lowest TCI code point among TCI code points that include two active TCI states for a PDSCH, the UE may assume the two active TCI states as the two default QCLs. When there is not the lowest TCI code point that includes the two active TCI states for the PDSCH, the UE may assume one default QCL for the two PDSCHs. The one default QCL may be certain QCL, or may be one active TCI state associated with the lowest TCI code point.

### [Default QCL 2]

One or two TCI states associated with a lowest code point for a PDSCH.

The lowest TCI code point for the PDSCH may be a lowest code point among TCI code points that are configured for the PDSCH, or may be a lowest code point among TCI code points that are activated for the PDSCH. In a case where the lowest TCI code point for the PDSCH is associated with two active TCI states, the UE may assume the two active TCI states as two default QCLs. In a case where the lowest TCI code point for the PDSCH is associated with one active TCI state, the UE may assume one default QCL for the two PDSCHs. One default QCL may be one active TCI state associated with the lowest TCI code point for the PDSCH, or may be certain QCL.

### [Default QCL 3]

Two default QCLs that are explicitly notified.

A new field or a new information element in at least one of an MAC CE and RRC may be defined. The UE may be explicitly notified of the two default QCLs by least one of the MAC CE and the RRC.

### [Default QCL 4]

Two default QCLs that are based on different rules.

One of the two default QCLs may be certain QCL, and the other one may be determined according to one of rules of the above-described default QCLs 1 to 3. When two TCI states can be obtained according to one of the rules of the default QCLs 1 to 3, the UE may use a lowest or highest TCI state ID (at a rank specified by a specification) as one default QCL, or may use a first or second TCI state (instructed at a position specified by the specification) as one default QCL.

In a case where, for example, the TCI field presence information is configured (S10: Y), and the time offset between reception of the PDCCH and reception of the corresponding PDSCH is the threshold or more (S20: N) as illustrated in Fig. 4, one or two TCI states associated with a TCI code point instructed by a TCI field of the PDCCH may be determined as QCL parameters for two PDSCHs (S50).

### <Operation In Case Where TCI Field Presence Information Is Not Configured>

In a case where, for example, the TCI field presence information is not configured (S10: N) as illustrated in Fig. 4, the UE may assume (use or determine) one or two default QCLs respectively for two PDSCHs (S30).

The default QCLs may conform to one of a following determination method 1 and determination method 2.

### [Determining Method 1]

In a case where a TCI state of a PDSCH is configured by RRC, or in a case where the TCI state of the PDSCH is activated by an MAC CE, the UE may assume as two default QCLs two TCI states associated with a lowest code point among TCI code points including two different TCI states to be configured or activated. In a case where at least one TCI code point associated with two different TCI states for a PDSCH is configured by RRC, or in a case where the at least one TCI code point associated with the two different TCI states for the PDSCH is activated by an MAC CE, the UE may assume as two default QCLs two TCI states associated with a lowest code point among TCI code points including two different TCI states to be configured or activated.

In a case where a TCI state of a PDSCH is not configured by RRC, or in a case where the TCI state of the PDSCH is not activated by an MAC CE, the UE may assume one (single) default QCL. In a case where at least one TCI code point associated with two different TCI states for a PDSCH is not configured by RRC, or in a case where the at least one TCI code point associated with the two different TCI states for the PDSCH is not activated by an MAC CE, the UE may assume one (single) default QCL.

In this case, the UE may determine one TCI state of a CORESET that satisfies a condition as one default QCL. The CORESET that satisfies the condition may be a CORESET that is used for certain QCL, may be a CORESET that has a lowest ID or a highest ID, or may be a CORESET of DCI for scheduling a PDSCH. In other words, the one default QCL may be certain QCL, may be a TCI state or a QCL assumption of a CORESET that has a lowest ID or a highest ID, or may be a TCI state or a QCL assumption of a CORESET of DCI for scheduling a PDSCH.

Even when the TCI field presence information is not configured, it may be assumed that a TCI state of a PDSCH is configured at all times, or it may be assumed that at least one TCI code point associated with two TCI states for the PDSCH is configured at all times. In other words, even in a case where the TCI field presence information is not configured, the UE may not expect that the TCI state of the PDSCH is not configured. Even in a case where the TCI field presence information is not configured, the UE may assume two default QCLs. The two default QCLs may conform to a lowest TCI code point among TCI code points having two active TCI states for a PDSCH, or may conform to a lowest TCI code point for a PDSCH. One of the two default QCLs may be certain QCL, or the other one may conform to a lowest TCI code point among TCI code points having two active TCI states for a PDSCH, or may conform to a lowest TCI code point for a PDSCH. The lowest TCI code point for the PDSCH may be a lowest code point among TCI code points configured for the PDSCH, or may be a lowest code point among TCI code points activated for the PDSCH.

### [Determining Method 2]

Default QCL for a case where TCI field presence information is not configured may be specified. In a case where the TCI field presence information is not configured, the UE may determine one TCI state of a CORESET that satisfies the condition or one TCI state that is explicitly notified as one QCL parameter for the two PDSCHs.

In a case where the TCI field presence information is not configured, the UE may assume one (single) default QCL. In this case, the UE may determine one TCI state of a CORESET that satisfies the condition or one TCI state that is explicitly notified as one default QCL. The one default QCL may be certain QCL, may be a TCI state or a QCL assumption of a CORESET that has a lowest ID or a highest ID, may be a TCI state or a QCL assumption of a CORESET of DCI for scheduling a PDSCH, or may be explicitly notified by an MAC CE or RRC (e.g., a new field or a new information element). In a case where two default QCLs are notified, the single default QCL may be first or second default QCL (instructed at a position specified by a specification) among the two default QCLs, or may be a lowest or highest TCI state ID (at a rank specified by the specification).

In a case where TCI field presence information is configured to single DCI-based multi TRP/panel transmission that uses at least one TCI state that is configured to a serving cell of a PDSCH to be scheduled and includes the QCL type D, and in a case where a time offset between reception of a PDCCH and reception of a corresponding PDSCH is less than a threshold (timeDurationForQCL) after reception of a TCI state activation command for a UE-specific PDSCH, the UE may assume that a DMRS port of the PDSCH conforms to a QCL parameter instructed by a next default TCI state. The UE may use as a default TCI state a TCI state associated with the lowest code point among TCI code points including two different TCI states to be activated for the PDSCH, or use one of the above-described default QCLs 1 to 4 as the default TCI state. In a case where all TCI code points are mapped in a single TCI state, the default TCI state may conform to an operation of Rel. 15 (certain QCL).

In a case where the TCI field presence information is not configured, the UE may conform to the operation of Rel. 15 (the UE may use certain QCL as one default TCI state for two PDSCHs).

Using the default TCI state for a plurality of PDSCHs based on the single DCI may be part of UE capability.

According to the above embodiment, even in the case where the TCI field presence information is not configured, the UE can appropriately determine default QCL for two PDSCHs.

### <Scheduling Offset Threshold>

The UE may report UE capability information that includes a scheduling offset threshold (e.g., timeDurationForQCL) for multiple PDSCHs. The scheduling offset threshold may be a value of Rel. 15. The scheduling offset threshold (scheduling offset thresholds of Rel. 16 and subsequent releases) for the multiple PDSCHs may be a parameter different from that of Rel. 15. This parameter may be reported by the UE capability information, or may be configured by a higher layer signaling (RRC signaling). The scheduling offset threshold for the multiple PDSCHs may be reported or configured per PDSCH of the multiple PDSCHs (per TRP or per CORESET pool index). For example, a scheduling offset threshold for a PDSCH 1 and a scheduling offset threshold for a PDSCH 2 may be independently reported or may be configured. The scheduling offset threshold for the PDSCH 1 and the scheduling offset threshold for the PDSCH 2 may be different.

### <Case Where Time Resources of Multiple PDSCHs Do Not Fully Overlap>

Time resources of multiple PDSCHs may not fully overlap. One DCI for scheduling the multiple PDSCHs may instruct the time resource for each of the multiple PDSCHs.

In a case where TCI field presence information is configured, a scheduling offset (time offset) of the PDSCH 1 is less than a scheduling offset threshold, and a scheduling offset of the PDSCH 2 is less than the scheduling offset threshold as illustrated in above-described Fig. 3, the UE may use one of the above-described default QCLs 1 to 4 for the PDSCH 1 and the PDSCH 2.

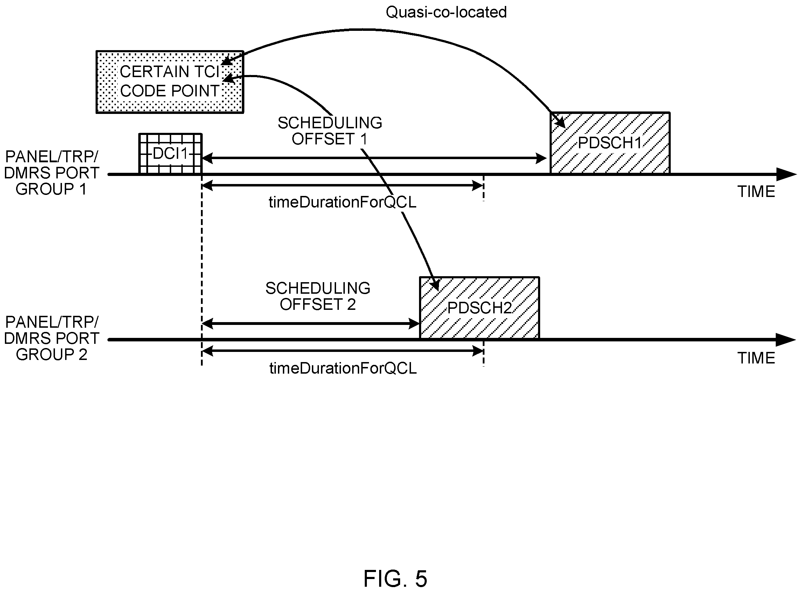

In a case where the scheduling offset of the PDSCH 1 is the scheduling offset threshold or more, and the scheduling offset of the PDSCH 2 is less than the scheduling offset threshold as illustrated in Fig. 5, a TCI state for the PDSCH 1 (a PDSCH whose scheduling offset is the scheduling offset threshold or more) may be determined based on a TCI field in scheduling DCI, and default QCL may be used for the PDSCH 2 (a PDSCH whose scheduling offset is less than the scheduling offset threshold).

In a case where a TCI code point of a TCI field is associated with one TCI state ID, the TCI state for the PDSCH 1 may be a TCI associated with the TCI code point. In a case where the TCI code point of the TCI field is associated with two TCI state IDs, the TCI state for the PDSCH 1 may be a TCI state of a certain position among the two TCI states indicated by RRC or an MAC CE (a list, a field or a bitmap). The certain position may be a first TCI state, may be a lowest or highest TCI state ID, a TCI state (the first TCI state for the PDSCH 2 and the second TCI state for the PDSCH 1 in Fig. 5) associated with a transmission order (time resource order) of the PDSCH 1 among multiple PDSCHs, or a TCI state associated with a CORESET pool index (a first CORESET pool index is associated with the first TCI state, and a second CORESET pool index is associated with the second TCI state).

The default QCL for the PDSCH 2 may be the above-described certain QCL, may be the TCI state of the certain position among two TCI states associated with a lowest code point (a TCI code point "001" in Fig. 3B) among TCI code points including two different TCI states to be configured or activated for a PDSCH, or may be one TCI state associated with a lowest code point (a TCI code point "000" in Fig. 3B) among TCI code points including one TCI state to be configured or activated for a PDSCH.

### (Radio Communication System)

The configuration of the radio communication system according to one embodiment of the present disclosure will be described below. This radio communication system uses one or a combination of the radio communication method according to each of the above embodiment of the present disclosure to perform communication.

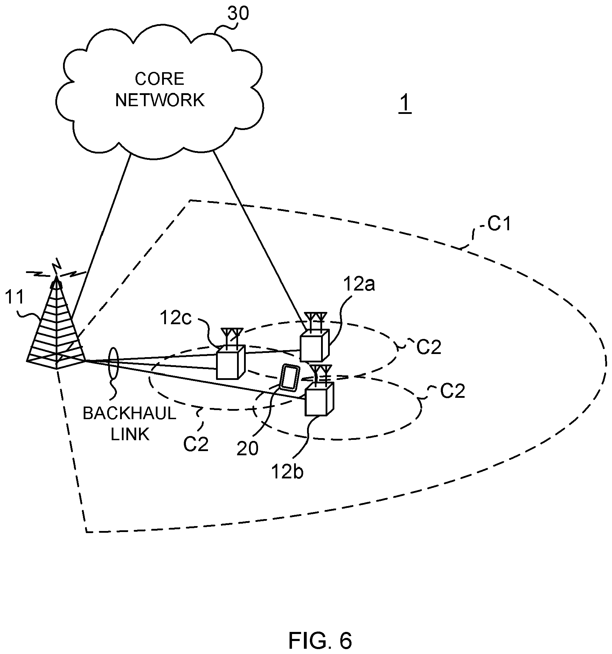

Fig. 6 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity between a plurality of Radio Access Technologies (RATs) (Multi-RAT Dual Connectivity (MR-DC)). MR-DC may include dual connectivity (E-UTRA-NR Dual Connectivity (EN-DC)) of LTE (Evolved Universal Terrestrial Radio Access (E-UTRA)) and NR, and dual connectivity (NR-E-UTRA Dual Connectivity (NE-DC)) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NR-NR Dual Connectivity (NN-DC)) where both of the MN and the SN are base stations (gNBs) according to NR).

The radio communication system 1 may include a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 6. The base stations 11 and 12 will be collectively referred to as a base station 10 below when not distinguished.

The user terminal 20 may connect with at least one of a plurality of base stations 10. The user terminal 20 may use at least one of Carrier Aggregation (CA) and Dual Connectivity (DC) that use a plurality of Component Carriers (CCs).

Each CC may be included in at least one of a first frequency range (Frequency Range 1 (FR 1)) and a second frequency range (Frequency Range 2 (FR 2)). The macro cell C1 may be included in the FR 1, and the small cell C2 may be included in the FR 2. For example, the FR 1 may be a frequency range equal to or less than 6 GHz (sub-6 GHz), and the FR 2 may be a frequency range higher than 24 GHz (above-24 GHz). In addition, the frequency ranges and definitions of the FR 1 and the FR 2 are not limited to these, and, for example, the FR 1 may correspond to a frequency range higher than the FR 2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as a backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the other base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (Physical Downlink Shared Channel (PDSCH)) shared by each user terminal 20, a broadcast channel (Physical Broadcast Channel (PBCH)) and a downlink control channel (Physical Downlink Control Channel (PDCCH)) as downlink channels.

Furthermore, the radio communication system 1 may use an uplink shared channel (Physical Uplink Shared Channel (PUSCH)) shared by each user terminal 20, an uplink control channel (Physical Uplink Control Channel (PUCCH)) and a random access channel (Physical Random Access Channel (PRACH)) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as, for example, a DL assignment or DL DCI, and DCI for scheduling the PUSCH may be referred to as, for example, a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One search space may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Uplink Control Information (UCI) including at least one of Channel State Information (CSI), transmission acknowledgement information (that may be referred to as, for example, Hybrid Automatic Repeat reQuest ACKnowledgement (HARQ-ACK) or ACK/NACK) and a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 may convey a Cell-certain Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as, for example, an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

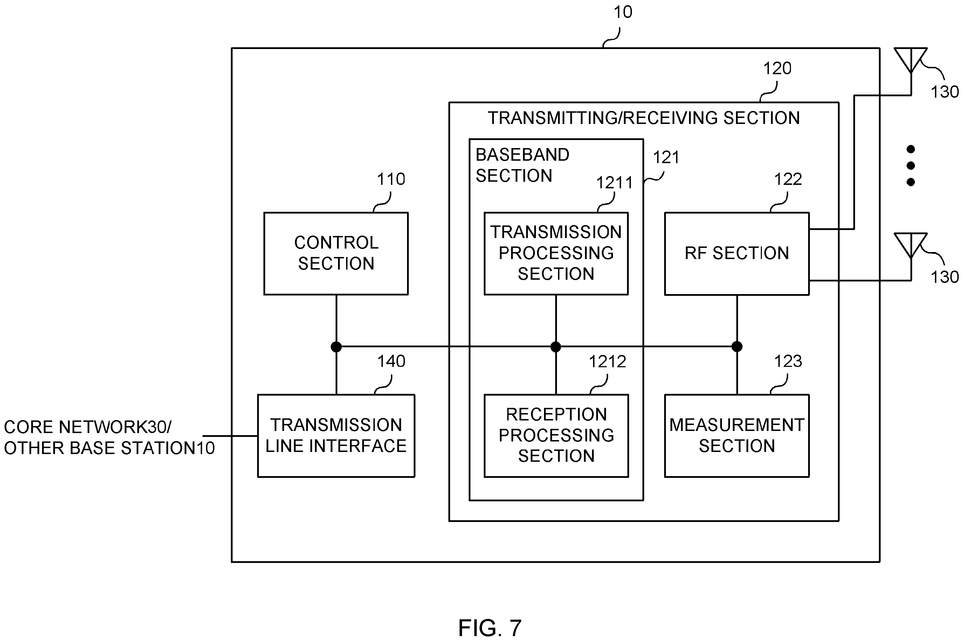

Fig. 7 is a diagram illustrating one example of a configuration of the base station according to the one embodiment. The base station 10 includes a control section 110, a transmitting/receiving section 120, transmission/reception antennas 130 and a transmission line interface 140. In addition, the base station 10 may include one or more of each of the control sections 110, the transmitting/receiving sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmitting/receiving section 120, the transmission/reception antennas 130 and the transmission line interface 140. The control section 110 may generate data, control information or a sequence to be transmitted as a signal, and forward the signal to the transmitting/receiving section 120. The control section 110 may perform call processing (such as configuration and release) of a communication channel, state management of the base station 10 and radio resource management.

The transmitting/receiving section 120 may include a baseband section 121, a Radio Frequency (RF) section 122 and a measurement section 123. The baseband section 121 may include a transmission processing section 1211 and a reception processing section 1212. The transmitting/receiving section 120 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 120 may be composed as an integrated transmitting/receiving section, or may be composed of a transmitting section and a receiving section. The transmitting section may be composed of the transmission processing section 1211 and the RF section 122. The receiving section may be composed of the reception processing section 1212, the RF section 122 and the measurement section 123.

The transmission/reception antenna 130 can be composed of an antenna such as an array antenna described based on the common knowledge in the technical field according to the present disclosure.

The transmitting/receiving section 120 may transmit the above-described downlink channel, synchronization signal and downlink reference signal. The transmitting/receiving section 120 may receive the above-described uplink channel and uplink reference signal.

The transmitting/receiving section 120 may form at least one of a transmission beam and a reception beam by using digital beam forming (e.g., precoding) or analog beam forming (e.g., phase rotation).

The transmitting/receiving section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmitting/receiving section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmitting/receiving section 120 (RF section 122) may modulate the baseband signal into a radio frequency range, perform filter processing and amplification on the signal, and transmit the signal of the radio frequency range via the transmission/reception antennas 130.

On the other hand, the transmitting/receiving section 120 (RF section 122) may perform amplification and filter processing on the signal of the radio frequency range received by the transmission/reception antennas 130, and demodulate the signal into a baseband signal.

The transmitting/receiving section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmitting/receiving section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmitting section and the receiving section of the base station 10 according to the present disclosure may be composed of at least one of the transmitting/receiving section 120, the transmission/reception antenna 130 and the transmission line interface 140.

In addition, the transmitting/receiving section 120 may transmit one or both of a plurality of Physical Downlink Shared Channels (PDSCHs) (multiple PDSCHs) scheduled based on one downlink control information (single PDCCH).

### (User Terminal)

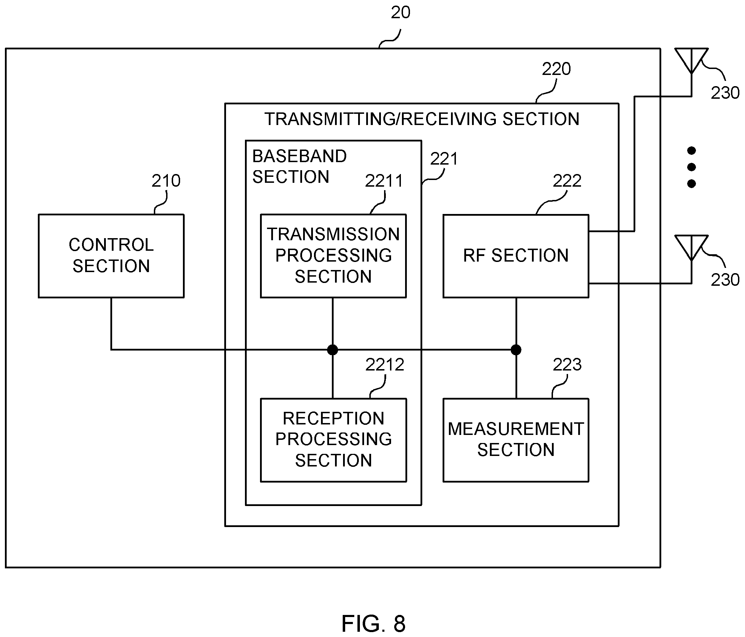

Fig. 8 is a diagram illustrating one example of a configuration of the user terminal according to the one embodiment. The user terminal 20 includes a control section 210, a transmitting/receiving section 220 and transmission/reception antennas 230. In this regard, the user terminal 20 may include one or more of each of the control sections 210, the transmitting/receiving sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmitting/receiving section 220 and the transmission/reception antennas 230. The control section 210 may generate data, control information or a sequence to be transmitted as a signal, and forward the signal to the transmitting/receiving section 220.

The transmitting/receiving section 220 may include a baseband section 221, an RF section 222 and a measurement section 223. The baseband section 221 may include a transmission processing section 2211 and a reception processing section 2212. The transmitting/receiving section 220 can be composed of a transmitter/receiver, an RF circuit, a baseband circuit, a filter, a phase shifter, a measurement circuit and a transmission/reception circuit described based on the common knowledge in the technical field according to the present disclosure.

The transmitting/receiving section 220 may be composed as an integrated transmitting/receiving section, or may be composed of a transmitting section and a receiving section. The transmitting section may be composed of the transmission processing section 2211 and the RF section 222. The receiving section may be composed of the reception processing section 2212, the RF section 222 and the measurement section 223.

The transmission/reception antenna 230 can be composed of an antenna such as an array antenna described based on the common knowledge in the technical field according to the present disclosure.

The transmitting/receiving section 220 may receive the above-described downlink channel, synchronization signal and downlink reference signal. The transmitting/receiving section 220 may transmit the above-described uplink channel and uplink reference signal.

The transmitting/receiving section 220 may form at least one of a transmission beam and a reception beam by using digital beam forming (e.g., precoding) or analog beam forming (e.g., phase rotation).

The transmitting/receiving section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmitting/receiving section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmitting/receiving section 220 (transmission processing section 2211) may perform the DFT processing as the above transmission processing to transmit the certain channel by using a DFT-s-OFDM waveform. When precoding is not enabled, the transmitting/receiving section 220 (transmission processing section 2211) may not perform the DFT processing as the above transmission processing.

The transmitting/receiving section 220 (RF section 222) may modulate the baseband signal into a radio frequency range, perform filter processing and amplification on the signal, and transmit the signal of the radio frequency range via the transmission/reception antennas 230.

On the other hand, the transmitting/receiving section 220 (RF section 222) may perform amplification and filter processing on the signal of the radio frequency range received by the transmission/reception antennas 230, and demodulate the signal into a baseband signal.

The transmitting/receiving section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmitting/receiving section 220 (measurement section 223) may perform measurement related to the received signal. For example, the measurement section 223 may perform, for example, RRM measurement or CSI measurement based on the received signal. The measurement section 223 may measure, for example, received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmitting section and the receiving section of the user terminal 20 according to the present disclosure may be composed of at least one of the transmitting/receiving section 220 and the transmission/reception antenna 230.

The transmitting/receiving section 220 may receive one Downlink Control Information (DCI) for scheduling two Physical Downlink Shared Channels (PDSCHs). The control section 210 may determine one or two QCL parameters for the two PDSCHs based on whether or not presence of a Transmission Configuration Indication (TCI) field is configured.

In a case where the presence of the TCI field is configured and a time offset between the DCI and the two PDSCHs is less than a threshold, the control section 210 may determine the one or two QCL parameters for the two PDSCHs based on a higher layer parameter.

In a case where the presence of the TCI field is not configured, and at least one code point associated with two TCI states for a PDSCH is configured or activated, the control section 210 may determine the two TCI states associated with the a lowest code point among the at least one code point as the two QCL parameters for the two PDSCHs.

In a case where the presence of the TCI field is not configured, and the TCI state for the PDSCH is not configured or activated, the control section 210 may determine one TCI state of a control resource set that satisfies a condition as one QCL parameter for the two PDSCHs.

In a case where the presence of the TCI field is not configured, the control section 210 may determine one TCI state of the control resource set that satisfies the condition or one TCI state that is explicitly notified as one QCL parameter for the two PDSCHs.

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as, for example, a transmitting unit or a transmitter. As described above, the method for realizing each function block is not limited in particular.

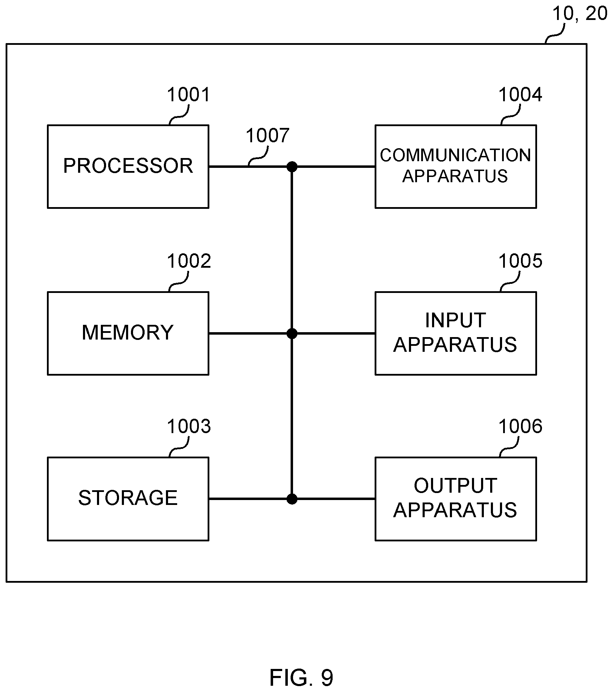

For example, the base station and the user terminal according to the one embodiment of the present disclosure may function as computers that perform processing of the radio communication method according to the present disclosure. Fig. 9 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 9 or may be configured without including part of the apparatuses.

For example, Fig. 9 illustrates the only one processor 1001. However, there may be a plurality of processors. Furthermore, processing may be executed by 1 processor or processing may be executed by 2 or more processors simultaneously or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmitting/receiving section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as, for example, a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmitting/receiving section 120 (220) and transmission/reception antennas 130 (230) may be realized by the communication apparatus 1004. The transmitting/receiving section 120 (220) may be physically or logically separately implemented as a transmitting section 120a (220a) and a receiving section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application certain Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS, or may be referred to as a pilot or a pilot signal depending on standards to be applied. Furthermore, a Component Carrier (CC) may be referred to as, for example, a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, certain filtering processing performed by a transceiver in a frequency domain, and certain windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as, for example, a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or code word, or may be a processing unit of scheduling or link adaptation. In addition, when the TTI is given, a time period (e.g., the number of symbols) in which a transport block, a code block or a code word is actually mapped may be shorter than the TTI.

In addition, in a case where 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as, for example, a general TTI (TTIs according to 3GPP Rel. 8 to 12), a normal TTI, a long TTI, a general subframe, a normal subframe, a long subframe or a slot. A TTI shorter than the general TTI may be referred to as, for example, a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as, for example, a Physical Resource Block (Physical RB (PRB)), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as, for example, a partial bandwidth) may mean a subset of contiguous common Resource Blocks (common RBs) for a certain numerology in a certain carrier. In this regard, the common RB may be specified by an RB index that is based on a common reference point of the certain carrier. A PRB may be defined based on a certain BWP, and may be numbered in the certain BWP.

The BWP may include a UL BWP (a BWP for UL) and a DL BWP (a BWP for DL). One or a plurality of BWPs in 1 carrier may be configured to the UE.

At least one of the configured BWPs may be active, and the UE may not assume to transmit and receive given signals/channels outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as the PUCCH and the PDCCH) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a certain location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspect/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be performed implicitly (by, for example, not performing notification of the given information or by performing notification of another information).

Judgement may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI state)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "Base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (Remote Radio Head (RRH))). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (User Equipment (UE))" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as, for example, a transmission apparatus, a reception apparatus or a radio communication apparatus. In addition, at least one of the base station and the mobile station may be, for example, a device mounted on a moving object or the moving object itself. The moving object may be a vehicle (e.g., a car or an airplane), may be a moving object (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented certain order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), the Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

In a case where the words "include" and "including" and modifications of these words are used in the present disclosure, these words intend to be comprehensive similar to the word "comprising". Furthermore, the word "or" used in the present disclosure intends to not be an exclusive OR.

In a case where, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspect without departing from the gist and the scope of the invention defined based on the recitation of the claims. Accordingly, the description of the present disclosure is intended for exemplary explanation, and does not bring any restrictive meaning to the invention according to the present disclosure.

Fig. 1
   CORESET OF LOWEST CORESET-ID SCHEDULING OFFSET TIME
Fig. 2A SINGLE MODE
Fig. 2B
   SINGLE MASTER MODE
Fig. 2C
   MASTER SLAVE MODE
Fig. 2D
   MULTIPLE MASTER MODE
Fig. 3A SPECIFIC TCI CODE POINT
   1, 2 PANEL/TRP/DMRS PORT GROUP
   1, 2 SCHEDULING OFFSET TIME
Fig. 3B
   TCI CODE POINT TCI STATE
Fig. 4
   (S10) IS TCI PRESENCE INFORMATION CONFIGURED?
   (S20) IS TIME OFFSET THRESHOLD OR MORE?
   (S30) DETERMINE 1 OR 2 DEFAULT QCLS
   (S40) DETERMINE 2 DEFAULT QCLS
   (S50) DETERMINE QCL PARAMETERS BASED ON TCI FIELD
Fig. 5
   SPECIFIC TCI CODE POINT
   1, 2 PANEL/TRP/DMRS PORT GROUP
   1, 2 SCHEDULING OFFSET TIME

## Claims

1. A terminal comprising:
a receiving section that receives one Downlink Control Information (DCI) for scheduling two Physical Downlink Shared Channels (PDSCHs); and
a control section that determines one or two Quasi Co-Locations (QCL) parameters for the two PDSCHs based on whether or not presence of a Transmission Configuration Indication (TCI) field is configured.

2. The terminal according to claim 1, wherein, when the presence of the TCI field is configured, and a time offset between the DCI and the two PDSCHs is less than a threshold, the control section determines the one or two QCL parameters for the two PDSCHs based on a higher layer parameter.

3. The terminal according to claim 1 or 2, wherein, when the presence of the TCI field is not configured and at least one code point associated with two TCI states for the PDSCHs is configured or activated, the control section determines two TCI states associated with a lowest code point among the at least one code point as the two QCL parameters for the two PDSCHs.

4. The terminal according to any one of claims 1 to 3, wherein, when the presence of the TCI field is not configured and a TCI state for the PDSCHs is not configured or activated, the control section determines one TCI state of a control resource set that satisfies a condition as the one QCL parameter for the two PDSCHs.

5. The terminal according to claim 1 or 2, wherein, when the presence of the TCI field is not configured, the control section determines one TCI state of a control resource set that satisfies a condition or one TCI state that is explicitly notified as the one QCL parameter for the two PDSCHs.

6. A radio communication method of a terminal comprising:
receiving one Downlink Control Information (DCI) for scheduling two Physical Downlink Shared Channels (PDSCHs); and
determining one or two Quasi Co-Locations (QCL) parameters for the two PDSCHs based on whether or not presence of a Transmission Configuration Indication (TCI) field is configured.
